(19) Europäisches Patentamt

European Patent Office

Office européen des brevets

(11) **EP 2 907 857 B1**

## (12) EUROPEAN PATENT SPECIFICATION

(45) Date of publication and mention
of the grant of the patent:
**01.04.2020 Bulletin 2020/14**

(21) Application number: **15020024.4**

(22) Date of filing: **18.02.2015**

(51) Int Cl.:
*C09J 5/06* (2006.01)        *C09J 123/08* (2006.01)
*C08L 91/06* (2006.01)

(54) **HOT-MELT ADHESIVE**

SCHMELZHAFTKLEBER

ADHÉSIF THERMOFUSIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2014 ES 201430210**

(43) Date of publication of application:
**19.08.2015 Bulletin 2015/34**

(73) Proprietor: **Forest Chemical Group S.L.
03113 Alicante (ES)**

(72) Inventor: **Hortelano, Sergio Vega
03006 Alicante (ES)**

(74) Representative: **Martin Alvarez, Juan Enrique et al
Ibidem Abogados Estrategas SLP
B54357488
Juan de la Cierva, 43, Planta 2 Local 1-1
03203 Elche (Alicante) (ES)**

(56) References cited:
**WO-A1-00/00564        WO-A1-99/35205
US-A1- 2005 042 469    US-B2- 8 076 407**

Remarks:
The file contains technical information submitted after
the application was filed and not included in this
specification

**Description**

Technical Field of the Invention

The present invention relates to a hot-melt adhesive with a softening point between 105-110°C, comprising an EVA copolymer with a 28% vinyl acetate content and a melt flow index greater than 400- The invention also relates to the application thereof for gluing cardboard, paper and wax paper together.

Background of the Invention

Hot-melt adhesives are used extensively for various commercial applications, such as product assembly and packaging, including case sealing and cardboard box closing operations. Such hot-melt adhesives are applied on a substrate when they are in their molten state, and they cool down so the adhesive layer can set.

Most hot-melt adhesives available on the market require temperatures of 177°C or higher to assure complete melting of all the components and also to achieve a satisfactory application viscosity. The need for such high temperatures is not without problems. High temperatures increase risks for operators with respect to both burns and inhalation of residual volatile components. Furthermore, the use of high temperatures requires more energy, placing higher demands on manufacturing facilities-Although adhesive formulations that can be applied at temperatures less than 151°C can be repaired using low molecular weight components or components with a high wax content, application viscosity can be affected, resulting in the adhesive losing some of its properties, for example, its tenacity, heat resistance and, often times, specific adhesion to a substrate. Although softer or more amorphous components can be added to improve adhesion, these components reduce effective heat resistance.

Another problem with hot-melt adhesive is the energy consumption associated with their use. The higher their softening point, the higher the consumption during their application in gluing; in turn, the higher their specific heat capacity the higher the energy consumption to maintain the application temperature.

Hot-melt adhesives are formulated using different copolymers, hydrocarbon resins, waxes, preservatives and antioxidants. The state of the art uses adhesives containing polymers such as ethylene vinyl acetate, ethylene methyl acrylate, ethylene acrylic acid, polyethylene, polypropylene, ethylene 2-ethylhexyl acrylate or ethylene n-butyl acrylate, etc. Furthermore, the properties of the adhesives depend on the monomer concentration, i.e., percentage of vinyl acetate, methyl acrylate, acrylic acid, 2-ethylhexyl, ethylene or n-butylacrylate.

Additionally, and EVA copolymer with 28% vinyl acetate can have different melt flow index (MFI) values, for example, 400, 600, 800, 900 or 1000.

Ethylene vinyl acetate-based adhesives are preferred because this polymer is the least expensive. However, adhesives comprising EVA have softening points of about 177°C, and they must therefore be applied at temperature greater than 177°C.

Patent document ES 2298661 describes a hot-melt adhesive with a softening point of 110°C by means of using rosins. Patent document EP727470 describes hot-melt adhesives with a softening point less than 125°C' using ethylene/n-butyl acrylate (EnBA). However, both EnBA and rosins are expensive, making the end product more costly.

Patent document EP1099742 describes hot-melt adhesives comprising 5-60% ethylene vinyl acetate with a vinyl acetate content greater than 30%, with a softening point of 130°C. This patent document, specifically in the formula of Example 16, discloses that adhesion is unacceptable when the vinyl acetate content is less than 30%. The person skilled in the art will therefore deduce that to glue polar substrates (cardboard, paper) together, EVA adhesives with a vinyl acetate content greater than 40% must be used.

Patent document WO 9935205 describe a composition containing EVA with a 28% vinyl acetate content and a melt flow index of 400, but this patent document does not describe the softening point of the adhesive.

Patent document US 8076407 describes EVA formulations with a 28% vinyl acetate content and a melt flow index of 400 prepared by means of a mixture at 140-180°C, i.e., this patent document does not describe in detail the softening point of the adhesive, and it would be greater than 120°C in any case.

US2005/0424S9 describes a hot melt adhesive based on ethylene-2-ethylhexyl acrylate copolymer that finds use in 15 packaging applications where high heat resistance, as well as good cold tolerance, is required.

There is a need to find inexpensive hot-melt adhesives with a softening point of 100-110°C, viscosity of 1000-1200 cP, and good adhesiveness, and which does not turn brown and can be applied at a temperature of 140°C.

Brief Description of the Invention

The present invention solves the aforementioned problems by means of selecting the concentrations and ranges of the components used in hot-melt adhesives- By means of selecting the concentration of EVA, the vinyl acetate content and the melt flow index, a hot-melt adhesive with a viscosity of 1100 cP at a temperature of 140°C, a softening temperature of 105- 110°C and optimal adhesive properties is obtained, without using rosins or other copolymers making the product costly.

Another advantage of the invention is that it reduces the amount of adhesive used during the gluing process by 30- 60%.

The adhesives of the invention have a viscosity of 110-1200 cP at 145°C.

In an embodiment, the adhesives of the invention have an average specific heat capacity of 2000 J/kg.K at 140°C.

The invention also provides a process for attaching two cardboard, paper or wax paper substrates to one another, comprising:

- Melting the adhesives of the invention at a temperature of 120-160°C and applying them on a surface, and
- pressing for 2 seconds.

In an embodiment of the process of the invention, the application temperature is 140-145 °C.

The invention also provides carboard, paper or wax paper obtainable by the process of the invention-Finally, another advantage of the present invention is that it provides a hot-melt adhesive with an average specific heat capacity less than 2000 J/kg·K, which results in a lower energy expenditure during the gluing process compared to adhesives described in the state of the art, which have an average specific heat capacity of about 2300 J/kg·K.

In other aspects, the invention relates to the substrates glued together with the adhesives described in the invention.

Detailed Description of the Invention

All the paLenL documents mentioned in the specification are incorporated herein in their entirety as references. All percentages refer to weight/ weight.

The adhesives are formulated using ethylene vinyl acetate (EVA) copolymer with a 28% vinyl acetate content, a C5/C9 hydrocarbon resin, microcrystalline wax and a Fischer- Tropsch wax.

The adhesives of the invention can additionally comprise a conventional stabilizer or antioxidant. These components are added to protect the adhesive from degradation caused by their light- or heat-induced reaction with oxygen.

The EVA copolymer with a 28% vinyl acetate content must have a melt flow index (MFI) greater than 400 and, preferably greater than 900.

The hydrocarbon resins used have a softening index of about 100°C, the microcrystalline wax has a drop point of 70- 760C, and the Fischer-Tropsch wax has a 1 mm needle penetration.

The softening temperature obtained in the adhesives of the invention is comprised between 105-110°C. By reducing the softening temperature in the adhesives, they can be applied at a lower temperature with the subsequent energy savings. Furthermore, the described adhesives show suitable viscosity for the application thereof.

The adhesives described herein are applied at temperatures between 120-160°C, preferably between 140-145°C.

Contact times between substrates are about 2 seconds without losing adhesion. The tests conducted on different substrates show good adhesion.

Surprisingly, according to a first aspect of the invention, the adhesive formulation containing:

- between 32-40% EVA (28% vinyl acetate, melt flow index greater than 900),
- 40-50% C5/C9 hydrocarbon resin with a melting point of 100°c,
- 10-15% Fischer-Tropsch wax,
- 4-6% microcrystalline wax with a drop point of 70- 760C, and
- 0-2% antioxidants,

and particularly when the melt flow index (MFI) of 28% vinyl acetate is 1000, shows a softening point between 105-110°C and allows reducing the amount of adhesive applied when gluing cardboard articles together by more than 30% compared to formulations containing more than 40% EVA (28% vinyl acetate, melt flow index of 400).In other words, the bead of adhesive formed when applying said adhesive is narrower.

Energy consumption drops described herein when they are to adhesives described in the 30% by using the adhesives applied at 140°C with respect state of the art applied at 170°C. Energy savings are due to the reduction in the working temperature, showing a difference of 30°C, and furthermore, to the adhesive of the invention having an average specific heat capacity at 140°C less than the adhesives described in the state of the art, which have an average value of about 2300 J/kg.K in the range of temperatures up to 170°C.

The adhesives described herein are manufactured by means of the methods described in the state of the art. The components are placed in a mixer at a temperature of 120°C, and the reaction mixture is stirred for 25-30 minutes.

Example 1. Formulations used in the invention

Formula 1

| Commercial product | Description | Characteristics | % (w/w) |
|---|---|---|---|
| PA 447 | EVA | 28% VA-1000 MFI | 37 |
| Velrez 5/9 Q6-100 | Hydrocarbon resin | C5/C9 100°c | 46 |
| QT-590 | Microcrystalline wax | 70-76°C drop point | 6 |
| Sasolwax HI | Fischer-Tropsch wax | 1 mm needle penetration | 10 |
| Kingnox 10 | Antioxidant | | 1 |

Formula 2 - Reference example

| Commercial product | Description | Characteristics | % (w/w) |
|---|---|---|---|
| PA 447 | EVA | 28% VA-1000 MFI | 32 |
| Velrez 5/9 Q6-100 | Hydrocarbon resin | C5/C9 100°c | 52 |
| QT-590 | Microcrystalline wax | 70-76°C drop point | 5 |
| Sasolwax HI | Fischer-Tropsch wax | 1 mm needle penetration | 10 |
| Kingnox 10 | Antioxidant | | 1 |

Formula 3

| Commercial product | Description | Characteristics | % (w/w) |
|---|---|---|---|
| PA 447 | EVA | 28% VA-1000 MFI | 40 |
| Velrez 5/9 Q6-100 | Hydrocarbon resin | C5/C9 100°c | 40.5 |
| QT-590 | Microcrystalline wax | 70-76°C drop point | 5 |
| Sasolwax HI | Fischer-Tropsch wax | 1 mm needle penetration | 14 |
| Kingnox 10 | Antioxidant | | 0.5 |
| Sasolwax HI | Fischer-Tropsch wax | 1 mm needle penetration | 14 |
| Kingnox 10 | Antioxidant | | 0.5 |

Reference formula, equivalent to US8076407, Examples 1-6

| Commercial product | Description | Characteristics | % (w/w) |
|---|---|---|---|
| PA 447 | EVA | 28% VA-400 MFI | 40 |
| Velrez 5/9 Q6-100 | Hydrocarbon resin | C5/C9 100°c | 40 |
| QT-590 | Microcrystalline wax | 70-76°C drop point | 5 |
| Sasolwax HI | Fischer-Tropsch wax | 1mm needle penetration | 14 |
| Kingnox 10 | Antioxidant | | 1 |

Example 2. Viscosity at different temperatures

Sample: Formula 2

| T (oc) | Screw | Speed (rpm) | Viscosity (cP) |
|--------|-------|-------------|----------------|
| 130 | S27 | 50 | 2330 |
| 135 | S27 | 100 | 1760 |
| 140 | S27 | 100 | 1470 |
| 145 | S27 | 100 | 1190 |
| 150 | S27 | 100 | 1070 |
| 155 | S27 | 100 | 885 |

Example 3. Adhesion tests at 145°C

Sample: Formula 1:

| Formula | Adhesion | Tear |
|---------|----------|------|
| Cardboard -Paper | Very good | Tear |
| Cardboard - Cardboard | Very good | Tear |
| Cardboard- Wax paper | Very good | Tear |
| Cardboard- Waxed cardboard | Good | Tear |

Example 4. Set time at 145°C

Test shows substrate contact times

| Sample | Time (s) |
|--------|----------|
| Formula 1 | 2 |
| Formula 2 | 2 |
| Formula 3 | 2 |
| Overall assessment | Good |

Example 5. Softening temperature

| Sample | Temperature (oc) |
|--------|------------------|
| Formula 1 | 107 |
| Formula 2 | 105 |
| Formula 3 | 108 |

Example 6. Thermal stability

After storing samples at 180°C in a forced air oven for 24 hours

| Sample | Observations |
|--------|--------------|
| Formula 1 | Without turning brown |
| Formula 2 | Without turning brown |

Example 7. Amount of adhesive in gluing

Adhesives according to formulas 1-3 and the reference formula were applied on 40x30xl 4 cm boxes. The amount of adhesive used during the gluing process was:

| Sample | Reference | Formula 1 | Formula 2 | Formula 3 |
|--------|-----------|-----------|-----------|-----------|
| Tank temperature (oc) | 175 | 160 | 150 | 160 |
| Nozzle temperature (oc) | 170 | 160 | 160 | 150 |
| Pump pressure (bar) | 2 | 2 | 2 | 2 |
| Amount of adhesive (g) | 7.04 | 5.75 | 4.63 | 4.71 |

It is observed that when formulations of the invention are used, savings in adhesive between 18% and 35% are obtained depending on the working conditions compared to the reference formulation.

Example 8. Energy savings

Energy expenditures of the adhesives described in formula 1 and a reference formulation with a melting point of 170°C were calculated. The reference formulation had the following composition:

| | |
|--|--|
| 28% VA-400 MFI | 35% |
| C5/C9 hydrocarbon resin | 44.5% |
| Fischer Tropsch wax | 20% |
| Antioxidant | 0.5% |

Micronl0 equipment was used at maximum melting capacity. The steps performed were:

1. Connecting the equipment at the working temperature of 140°C or 170°C,
2. Maintaining the working temperature for 5 hours to evaluate no-load energy losses,
3. Filling the equipment with adhesives and filler,
4. Determining maximum pumping speed,
5. Measuring pumped adhesive by means of weighing,
6. Determining the equipment's maximum melting capacity,
7. Calculating the energy expenditure of the equipment to maintain said maximum melting capacity.

For formula 1, the maximum melting capacity was 13.8 kg/h, energy consumption was 1167 W·h and maximum melting capacity was about 85 W·h/kg. Furthermore, the average specific heat capacity obtained was about 2000 J/kg·K.
For the reference formula, the maximum melting capacity was 14 kg/h, energy consumption was 1660 W·h and maximum melting capacity was about 118.5 W·h/kg. Furthermore, the average specific heat capacity obtained was about 2300 J/kg-K.
The preceding results showed 30% energy savings when the adhesives described herein are applied aL 140°C.

**Claims**

1. A hot-melt adhesive with a softening point of 105-110 °C containing: 32-40% ethylene vinyl acetate (EVA) copolymer, 40-50% C5/C9 hydrocarbon resin with a melting point of 100 °C, 4-6% microcrystalline wax with a drop point of 70-76 °C, 10-15% Fischer-Tropsch wax and 0-2% antioxidants, **characterized in that** the EVA copolymer has a 28% vinyl acetate content and a melt flow index greater than 900.

**2.** The adhesives according to claim 1 with a viscosity of 1100-1200 cP at 145 °c.

**3.** The adhesives according to any of the preceding claims, **characterized in that** they have an average specific heat capacity of 2000 J/kg·K at 140 °C.

**4.** A process for attaching two cardboard, paper or wax paper substrates to one another, comprising:

- melting the adhesives according to claims 1-3 at a temperature of 120-160 °C and applying them on a surface, and
- pressing for 2 seconds.

**5.** The process according to claim 4, **characterized in that** the application temperature is 140-145 °C.

**6.** Cardboard, paper or wax paper obtainable according to claims 4-5.

**Patentansprüche**

**1.** Schmelzhaftkleber mit einem Erweichungspunkt von 105-110ºC, welcher Folgendes enthält: 32-40% Ethylen-Vinylacetat (EVA)-Copolymer, 40-50% C5/C9 Kohlenwasserstoffharz mit einem Schmelzpunkt von 100ºC, 4-6% mikrokristallines Wachs mit einem Tropfpunkt von 70-76ºC, 10-15% Fischer-Tropsch-Wachs und 0-2% Antioxidantien, **dadurch gekennzeichnet, dass** das EVA-Copolymer einen Vinylacetatgehalt von 28% und einen Schmelzindex von mehr als 900 aufweist.

**2.** Kleber nach Anspruch 1, mit einer Viskosität von 1100-1200 cP bei 145ºC.

**3.** Kleber nach einem der vorhergehenden Ansprüche, **dadurch gekennzeichnet, dass** sie eine durchschnittliche spezifische Wärmekapazität von 2000 J/kg·K bei 140ºC aufweisen.

**4.** Verfahren zum Miteinanderverbinden von zwei Papp-, Papier- oder Wachspapiersubstraten, welches Folgendes umfasst:

- das Schmelzen der Kleber nach den Ansprüchen 1-3 bei einer Temperatur von 120-160ºC und das Auftragen derselben auf einer Oberfläche, und
- das Drücken 2 Sekunden lang.

**5.** Verfahren nach Anspruch 4, **dadurch gekennzeichnet, dass** die Auftragungstemperatur 140-145ºC ist.

**6.** Pappe, Papier oder Wachspapier, welche(s) nach den Ansprüchen 4-5 erhältlich ist.

**Revendications**

**1.** Adhésif thermofusible avec un point de ramollissement de 105-110ºC contenant : 32-40% de copolymère d'éthylène-acétate de vinyle (EVA), 40-50% de résine d'hydrocarbure C5/C9 avec un point de fusion de 100ºC, 4-6% de cire microcristalline avec un point de goutte de 70-76ºC, 10-15% de cire de Fischer-Tropsch et 0-2% d'antioxydants, **caractérisé en ce que** le copolymère d'EVA a un contenu en acétate de vinyle de 28% et un indice de fluidité à chaud supérieur à 900.

**2.** Adhésifs selon la revendication 1, avec une viscosité de 1100-1200 cP à 145ºC.

**3.** Adhésifs selon l'une quelconque des revendications précédentes, **caractérisés en ce qu'**ils ont une capacité calorifique spécifique moyenne de 2000 J/kg·K à 140ºC.

**4.** Procédé de fixation de deux substrats en carton, papier ou papier ciré entre eux, comprenant :

- la fusion des adhésifs selon les revendications 1-3 à une température de 120-160ºC et leur application sur une surface, et

- le pressage pendant 2 secondes.

5. Procédé selon la revendication 4, **caractérisé en ce que** la température d'application est de 140-145ºC.

6. Carton, papier ou papier ciré susceptibles d'être obtenus selon les revendications 4-5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2298661
- EP 727470 A
- EP 1099742 A
- WO 9935205 A
- US 8076407 B
- US 20050424S9 A